# EUROPEAN PATENT SPECIFICATION

(11) **EP 3 083 745 B1**
(45) Date of publication and mention of the grant of the patent: **11.09.2019**
(21) Application number: 14821422.4
(22) Date of filing: 11.12.2014
(51) Int. Cl.: C08G 18/75, C08G 18/10, C08G 18/22, C08G 18/24, C08G 18/32, C08G 18/38, C08G 18/42, C08L 75/02

(54) **POLYURETHANEUREAS OR POLYUREAS**
POLYURETHANHARNSTOFFE ODER POLYHARNSTOFFE
POLYURÉTHANNE-URÉES OU POLYURÉES

(30) Priority: 17.12.2013 US 201314108865
(43) Date of publication of application: 26.10.2016
(73) Proprietor: Covestro LLC, Pittsburgh, PA 15205 (US)
(72) Inventor: HAIDER, Karl W., Wexford, PA 15090 (US); OPERCHAL, Julie, Conway, PA 15027 (US); ROESLER, Richard R., Pelican Rapids, MN 56572 (US); STARCHER, Rick V., Monaca, PA 15061 (US); STRAZISAR, Stephanie, Venetia, PA 15367 (US)
(74) Representative: Levpat
(86) International application number: PCT/US2014/069697
(87) International publication number: WO 2015/094893

(56) References cited:
- CN-A- 101 928 376

## Description

### BACKGROUND

This invention relates to polyurethane/polyureas with improved catalysis, and to a process for the preparation of these polyurethane/polyureas. These materials comprise the reaction product of (A) a liquid polyisocyanate or polyisocyanate prepolymer, with (B) an isocyanate-reactive component comprising at least one aromatic diamine compound containing from 1 to 8 thiomethyl groups, in the presence of (C) one or more catalysts selected from the group consisting of tin (II) catalysts, bismuth (III) catalysts and mixtures thereof.

Polyurethanes, polyureas and/or polyurethaneureas which are transparent and/or exhibit good optical clarity are described in, for example, U.S. Patents 5,962,617, 6,127,505, 6,562,932 and 6,939,939, and U.S. Published Patent Application 2007/0100112. These materials are also described as being impact resistant materials or high impact materials.

Light stable one-shot urethane-urea elastomers and a process for their production are described in U.S. Patent 6,562,932. This process comprises reacting a polyisocyanate or prepolymer thereof with an isocyanate-reactive component, in the presence of C) at least one organometallic catalyst. Suitable isocyanate-reactive components comprise (1) at least one aromatic diamine compound and (2) at least one organic compound having at least two hydroxyl groups and having a molecular weight of 62 to 6,000. Although the authors refer to a bis(thiomethyl)detda cured system similar to that of our current invention, reference is made to the long processing times and no solution was provided in the Markusch reference.

U.S. Published Patent Application 20070100112 discloses optically clear polyurethane-ureas which comprise the reaction product of a (cyclo)aliphatic polisocyanate or prepolymer thereof with an isocyanate-reactive component that comprises one or more aromatic diamines that contain two primary amine groups, and one or more compounds containing two secondary amine groups which may be linked to aliphatic and/or aromatic moieties. Polyaspartic esters are particularly preferred compounds that contain two secondary amine groups.

Both U.S. Patent 6,562,932 and U.S. Published Patent Application 200700112 exhibit processing advantages over the systems such as those described in US 6,127,505. In spite of these advantages, the need for additional improvements exists, particularly with regard to further processing improvements,cure rates, etc..

Advantages of the presently claimed invention include light stable polyurethane/polyurea materials which may also be optically clear. The process described herein for manufacturing these polyurethane/polyurea materials has good processing conditions and gel times which are similar to other materials of the previous art.

Thiomethyl group substituted aromatic diamines appear to increase the gel time and demold time required for polyurethane/polyurea materials comparied to non-sulfur containing aromatic diamines. Many of the common and well know polyurethane catalysts have been found to have little to no effect on the cure rate of these thiomethyl group substituted aromatic diamines with aliphatic isocyanate terminated polyurethane prepolymers. Surprisingly, we have found that Sn (II) and Bi (III) based catalyst were effective in accelerating curing of polyurethane prepolymers using these thiomethyl group containing diamine chain extenders.

### SUMMARY

This invention relates to polyurethane/ polyurea or materials with improved catalysis, and to a process for the preparation of these polyurethane/polyurea materials.

These polyurethane/polyurea materials comprise the reaction product of
(A) a (cyclo)aliphatic polyisocyanate or (cyclo)aliphatic polyisocyanate prepolymer having an NCO group content of about 4 to about 60% and an average functionality of 1.8 to 6, preferably of 2 to 3, wherein the (cyclo)aliphatic polyisocyanate prepolymer comprises an organic compound (A)(2) having at least 2 hydroxyl groups and a number average molecular weight of 200 to 1,000;
   with
(B) an isocyanate-reactive component comprising at least one aromatic diamine compound containing from 1 to 8 thiomethyl groups and having a molecular weight of 150 to 1000, preferably of 150 to 600;
   in the presence of
(C) one or more catalysts selected from the group consisting of tin (II) catalysts, bismuth (III) catalysts and mixtures thereof;
   wherein the relative quantities of (A) and (B) are such that the Isocyanate Index is from about 70 to about 130.

The process for preparing these polyurethane/polyurea materials comprises:
(1) reacting
   (A) a (cyclo)aliphatic polyisocyanate or (cyclo)aliphatic polyisocyanate prepolymer having an NCO group content of about 4 to about 60% and an average functionality of 1.8 to 6, wherein the (cyclo)aliphatic polyisocyanate prepolymer comprises an organic compound component (A)(2) having at least 2 hydroxyl groups and a number average molecular weight of 200 to 1,000;
      with
   (B) an isocyanate-reactive component comprising at least one aromatic diamine compound containing from 1 to 8 thiomethyl groups and having a molecular weight of 150 to 1000, preferably 150 to 600;
      in the presence of
   (C) one or more catalysts selected from the group consisting of tin (II) catalysts, bismuth (III) catalysts and mixtures thereof;
      wherein the relative quantities of (A) and (B) are such that the Isocyanate Index is from about 70 to about 130.

### DETAILED DESCRIPTION OF THE INVENTION

Equivalent weights and molecular weights given herein in Daltons (Da) are number average equivalent weights and number average molecular weights respectively, unless indicated otherwise.

The (cyclo)aliphatic polyisocyanate or (cyclo)aliphatic polyisocyanate prepolymer, component (A), has an NCO group content of about 4 to 60%, and an average functionality of about 1.8 to 6, and preferably of 2 to 3. Preferably, component (A) has an NCO group content of about 7 to 32%, most preferably 10 to 20% by weight.

Suitable (cyclo)aliphatic polyisocyanates for the polyisocyanate component include those having an NCO group content of about 32% to about 50% by weight and a functionality of about 2.

Suitable (cyclo)aliphatic polyisocyanates are selected from the group consisting of dicyclohexylmethane-4,4'-diisocyanate (rMDI), 1,6-hexamethylene diisocyanate (HDI), pentane diisocyanate, isophorone diisocyanate (IPDI), 1,4-cyclohexane diisocyanate (CHDI), m-tetramethylxylene diisocyanate (m-TMXDI), trimers of 1,6-hexamethylene diisocyanate (HDI), biurets of 1,6-hexamethylene diisocyanate (HDI), allophanates of 1,6-hexamethylene diisocyanate (HDI), allophanates of trimers of 1,6-hexamethylene diisocyanate (HDI) and mixtures thereof.

When component (A) is a polyisocyanate prepolymer, the preferred polyisocyanate for component (A)(1) is dicyclohexylmethane-4,4'-diisocyanate, which has an isocyanate group content of about 32% and is commercially available from Bayer Corporation.

When component (A) is a polyisocyanate prepolymer, the prepolymer is prepared by reacting (A)(1) the polyisocyanate component with component (A)(2) an organic compound having at least two hydroxyl groups and a molecular weight of from about 62 to 8000. Suitable organic compounds to be used as component (A)(2) in accordance with the present invention include those compounds having at least 2 hydroxyl groups, preferably 2 to 3 hydroxyl groups and most preferably 2 hydroxyl groups. These compounds preferably have a molecular weight of 200 to 1,000. Examples of suitable compounds to be used component (A)(2) include glycols, polyethers, polythioethers, polyesters, polycaprolactones, polycarbonates and polyacetals.

Examples of glycols and other suitable components for (A)(2) include compounds known to be suitable as low molecular weight chain extenders as well as low molecular weight diols. Some examples include those compounds with molecular weight of about 350 or less such as, for example, an alkylene (C₂₋₂₂) glycol, e. g., ethylene glycol, propylene glycol, 1,4-butylene glycol, 1,3-butylene glycol, 1,2-butylene glycol, 1,6-hexanediol, 2-methyl-1,3-propanediol, 2,2,4-trimethylpentane-1,3-diol, neopentyl glycol, 1,10-dodecanediol; poly(alkylene(C₂₋₁₅) glycol), e.g., diethylene glycol, triethylene glycol, tetraethylene glycol, dipropylene glycol, tripropylene glycol; other glycols such as cyclohexane dimethanol, hydrogenated bisphenol A, 1,4-dihydroxy-2-butene, 2,6-dimethyl-1-octene-3,8-diol, hydroquinone bis(2-hydroxy-ethyl)ether, resorcinol bis(2-hydroxyethyl)ether, bishydroxyethylene terephthalate; low molecular weight triols with molecular weight of 350 of less such as glycerin, 2-methyl-2-hydroxymethyl-1,3-propanediol, 2,4-dihydroxy-3-hydroxymethyl-pentane, 1,2,6-hexanetriol, 1,1,1-tris(hydroxymethyl)propane, 2,2-bis(hydroxymethyl)-3-butanol and other aliphatic triols (C₈₋₂₀), etc., as well as mixtures thereof, and the like. It is also possible that mixtures of the above mentioned compounds with small amounts of mono-functional and/or higher-functional compounds can be used as component (A)(2) provided that the above functionality and molecular weight requirements are satisfied.

Suitable polyester polyols may, for example, be prepared from organic dicarboxylic acids having from 2 to 12 carbon atoms, preferably aliphatic dicarboxylic acids having from 4 to 6 carbon atoms, and polyhydric alcohols, preferably diols, having from 2 to 12 carbon atoms, preferably from 2 to 6 carbon atoms. Examples of possible dicarboxylic acids are: succinic acid, glutaric acid, adipic acid, suberic acid, azelaic acid, sebacic acid, decanedicarboxylic acid, maleic acid, fumaric acid, phthalic acid, isophthalic acid and terephthalic acid. These dicarboxylic acids may be used individually or else in a mixture with one another. Instead of the free dicarboxylic acids, it is also possible to use the corresponding dicarboxylic acid derivatives, such as esters of dicarboxylic acids with alcohols having from 1 to 4 carbon atoms, or anhydrides of dicarboxylic acids. Examples of di- and polyhydric alcohols are: ethanediol, diethylene glycol, 1,2- and 1,3-propanediol, dipropylene glycol, 1,4-butanediol, 1,5-pentanediol, 1,6-hexanediol, 1,10-decanediol, 1,12-dodecanediol, glycerol and trimethylolpropane. It is also possible to use polyester polyols made from lactones, e. g. ε-caprolactone or hydroxycarboxylic acids, e.g. omega-hydroxycaproic acid. Preferred polyester polyols for the present invention include those polyesters which do not have a tendency to crystallize.

Also, suitable compounds to be used as component (A)(2) include polycarbonate polyols obtained by a ring-opening polymerization of ethylene carbonate using the low molecular weight diols and low molecular weight triols as an initiator; and natural polyols such as castor oil; polyolefin polyols such as polybutadiene polyol and polyisoprene polyol and hydrogenated products thereof. These may be used alone or as mixtures of two or more of them.

Other suitable polyols for component (A)(2) include polycarbonate diols, which may be obtained by reacting diphenyl or dimethyl carbonate with low molecular weight diols or triols, ε-caprolactone-modified diols or triols of the type mentioned above.

Suitable polyesters, polythioethers, polyacetals, polycarbonates and other polyhydroxyl compounds which may be used in accordance with the invention may be found, for example, in High Polymers, Volume XVI, "Polyurethanes, Chemistry and Technology," by Saunders-Frisch, Interscience Publishers, New York, London, Vol. I, 1962, pages 32-42 and 44-54, and Volume II, 1964, pages 5-6 and 198-199; and in Kunststoff-Handbuch, Vol. VII, Vieweg-Hochtlen, Carl Hanser Verlag, Munich, 1966, pages 45-71.

The polyethers suitable for use in accordance with the present invention are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF₃ or KOH, or by chemically adding these epoxides, preferably ethylene oxide and propylene oxide, in admixture or successively to components containing reactive hydrogen atoms such as water, alcohols or amines. Suitable initiator compounds which can be alkoxylated to form component (A)(2) in the present invention include, for example, the low molecular weight chain extenders, ethylene glycol, propylene glycol, diethylene glycol, dipropylene glycol, butyl carbitol, butanediol, pentanediol, bisphenol A, neopentyl glycol, trimethyl pentanediol, cyclohexane dimethanol, etc. Mixtures of suitable initiator compounds can also be used provided that the functionality of the resultant polyol mixture is at least about 2.0.

Suitable polyethers include, for example, those compounds based on di-functional starters such as, for example, water, ethylene glycol, propylene glycol, etc. These compounds include copolymers of ethylene oxide and propylene oxide.

In one embodiment of the present invention, component (A) is a polyisocyanate prepolymer that comprises the reaction product of (A)(1) a (cyclo)aliphatic polyisocyanate comprising 4,4'-dicyclohexylmethane diisocyanate, with (A)(2) at least one organic compound having at least two hydroxyl groups and a molecular weight of from about 62 to 8000. In this embodiment, the prepolymer preferably comprises the reaction product of (A)(1) dicyclohexylmethane-4,4'-diisocyanate, with (A)(2) at least one organic compound having at least two to three hydroxyl groups and a molecular weight of from about 200 to 1000. It is preferred in this embodiment that the organic compound (A)(2) be selected from the group consisting of polytetramethylene ether glycols, polycaprolactones and mixtures thereof.

The isocyanate-reactive component (B) in the present invention comprises at least one aromatic diamine compound which contains from 1 to 8 thiomethyl groups, and has a molecular weight of from 150 to 1000. Preferred compounds for component (B) contain from 1 to 3 thiomethyl groups, and have a molecular weight of from 150 to 300.

Examples of suitable aromatic diamine compounds containing 1 to 8 thiomethyl groups include 3,5-dimethylthiotoluene-2,4-diamine, 3,5-dimethylthiotoluene-2,6-diamine, isomers of di(methylthio)benzene diamine and di(methylthio)toluene diamine, isomers of tri(methylthio)benzene diamine and tri(methylthio)toluene diamine and all isomers of thiomethyl group substituted benzene diamines thiomethyl group substituted toluene diamines, thiomethyl group substituted diphenylmethane diamines and mixtures thereof. Most preferred compounds to be used as component (B) are 3,5-dimethylthiotoluene-2,4-diamine, 3,5-dimethylthiotoluene-2,6-diamine and mixtures thereof.

Suitable catalysts (C) for the present invention are selected from the group consisting of tin (II) catalysts, bismuth (III) catalysts and mixtures thereof. Suitable tin (II) catalysts include those selected from the group consisting of tin(II) bromide, tin (II) oxide, tin(II) acetate, tin(II) octoates, etc. and mixtures thereof. Suitable bismuth (III) catalysts include bismuth carboxylates such as, for example, bismuth octoates such as, for example bis(tris)-2-ethylhexanoate, etc. The preferred catalysts for the present invention are selected from the group consisting of tin (II) octoates, bismuth (tris)octoates and mixtures thereof.

The organometallic catalyst can be used in a quantity ranging from about 0.002 to about 5%, preferably from about 0.01 to about 1% by weight, based on the total quantity of components (A), (B), and (C).

In addition, various additives may also be present in the reaction, for example, surface-active additives such as emulsifiers, and other additives known to be useful in polyurethane chemistry.

In addition to the surface-active agents, other additives which may be used in the molding compositions of the present invention include flame retarding agents, plasticizers, antioxidants, UV stabilizers, adhesion promoters, dyes, viscosity depressants, and internal mold release agents. Suitable antioxidants include, for example, Irganox 245, and suitable UV stabilizers include, for example, Tinuvin 765. However, any of the known antioxidants and/or UV stabilizers may be used. If a stabilizer selected from the group consisting of antioxidants, UV-stabilizers, hindered amine light stabilizers, and mixtures thereof is present, it is preferably added to the polyisocyanate or the polyisocyanate prepolymer.

The reactants are used in quantities such that the isocyanate index is from about 70 to 130, preferably from about 90 to about 120. By "isocyanate index" is meant the quotient of the number of isocyanate groups divided by the number of isocyanate-reactive groups, multiplied by 100.

The polyurethane/polyurea materials of the invention are preferably prepared by casting into a suitable mold. The temperature at which the polyurethane/polyurea materials of the invention can be prepared over a wide range of processing conditions and mold temperatures. The gel times of the materials of the present invention are preferably greater than 2 minutes and < 20 minutes under processing conditions. One skilled in the art will recognize these gel times can be optimized by varying processing temperature and/or catalyst levels. The polyurethane/polyurea materials of the present invention have a shore hardness that can vary over a very wide range, i.e., Shore A 40 to Shore D 95, depending on the choice of polyisocyanate or prepolymer thereof, and aromatic diamine compounds containing thiomethyl groups.

The polyurethane/polyurea materials prepared according to the invention are preferably optically clear.

As used herein, the term "optically clear" means a light transmittance similar or superior to other polymer glasses, i.e., acrylics or polycarbonate. The light transmittance of the polyurethane/polyurea materials of the present invention is close to optical grade glass used for lenses, binoculars, etc.

The optically clear polyurethane/polyurea products obtainable by the novel process may be used as a glass substitute, for example as sun roofs, front windows, back windows or side windows in automotive or aircraft construction and/or as lamp covers, for example as front lamps or rear lamps in aircraft or automotive construction. The polyurethane/polyurea materials prepared according to the invention may preferably be used, for example, in optical applications such as lenses for eyeglasses, safety glasses, and security glass.

The following examples further illustrate details for the present invention. The invention, which is set forth in the foregoing disclosure, is not to be limited either in spirit or scope by these examples. Those skilled in the art will readily understand that known variations of the conditions and processes of the following preparative procedures can be used to prepare these compounds. Unless otherwise noted, all temperatures are degrees Celsius and all parts and percentages are parts by weight and percentages by weight, respectively.

### EXAMPLES

The following components were used in the working examples:
Iso A: dicyclohexylmethane-4,4'-diisocyanate which contains about 20% of the trans, trans isomer, and has an NCO group content of about 32%
Polyol A: a polycaprolactone polyester polyol having a MW of about 400 g/mol and a functionality of 2.0; described as a polymer of 2-oxepanone with 1,6-hexanediol; commercially available as Tone UC32B8 (CAS RN = 36609-29-7)
Prepolymer A: an isocyanate prepolymer having an NCO group content of about 12.5%, a functionality of 2, and comprised the reaction product of Iso A with Polyol A
Amine A: a mixture of 80% by weight of 3,5-dimethylthiotoluene-2,4-diamine and 20% by weight of 3,5-dimethylthiotoluene-2,6-diamine; commercially available as Ethacure® 300 Curative from the Albemarle Corporation
Catalyst A: dibutyltin dilaurate commercially available from Air Prdoucts as Dabco®T12
Catalyst B: 33% triethylenediamine in ethylene glycol commercially available from Air Products as DABCO® EG
Catalyst C: aluminum chelate catalyst commercially available from King Industries as K-Kat® 5218
Catalyst D: zirconium chelate catalyst commercially available from King Industries as K-Kat® XC 6212
Catalyst E: 1,1,3,3-tetrabutyl-1,3-bis[(1-oxododecyl)oxy]distannoxane, which is commercially available from Goldschmidt Industrial Chemicals as Tegokat® 225
Catalyst F: zinc octoate, commercially available from Shephard Chemical
Catalyst G: stannous octoate, commercially available from Goldschmidt Indistrial Chemicals as Tegokat® 129
Catalyst H: bismuth 2-ethylhexanoate, commercially available from Shephard Chemical as Bicat H
Catalyst I: stannous acetate
Catalyst J: stannous bromide
Catalyst K: stannous oxide
Polyurethane/polyureas were prepared from the above materials in accordance with the formulations set forth in TABLE 1.

In the following examples, which demonstrate the gel times of the system as a function of catalyst type and temperature, a polyurethane/polyurea was prepared from Prepolymer A (prepared without catalyst) and Amine A. In these gel time experiments, Prepolymer A was initially held at room temperature or 50ºC prior to combing with Amine A. The temperature of Prepolymer A is as indicated in Table 1. In all Examples, Amine A was held at room temperature prior to being combined with Prepolymer A.

In each Example, 100 g of Prepolymer A was added to a Flacktek Speed Mixer™ Max 100 mixing cup. The catalyst (0.5 g.) and Amine A (32.6g) were added to the cup, and the components were mixed at 2000 rpm for 30 seconds in a Hauschild DAC 400 FV SpeedMixer™. The mixture was poured into an aluminum sample, cup, held in the thermostatically controlled sample well of a Gardner gel timer at 110ºC. After 30 seconds in the cup, the probe of the gel time meter was inserted into the curing mixture, and the gel time was measured and recorded. The results are reported in TABLE 1.

**TABLE 1:**

| Example | Catalyst (0.5 g) | Temp (ºC) | Gel Time (mins) |
|---|---|---|---|
| 1 - Comparative | None | RT | 31.5 |
| 2 - Comparative | None | 50 | 26 |
| 3 - Comparative | Catalyst B | RT | 26.2 |
| 4 - Comparative | Catalyst B | 50 | 24.5 |
| 5 - Comparative | Catalyst A | 50 | 21.2 |
| 6 - Comparative | Catalyst C | 50 | 24.7 |
| 7 - Comparative | Catalyst D | 50 | 26.3 |
| 8 - Comparative | Catalyst E | 50 | 25.9 |
| 9 - Comparative | Catalyst F | 50 | 22.2 |
| 10 - Invention | Catalyst G | RT | 13.9 |
| 11 - Invention | Catalyst G | 50 | 7.2 |
| 12 - Invention | Catalyst H | RT | 18.3 |
| 13 - Invention | Catalyst H | 50 | 5.2 |
| 14 - Invention | Catalyst I | 50 | 9.5 |
| 15 - Invention | Catalyst J | 50 | 15.8 |
| 16 - Invention | Catalyst K | 50 | 17.8 |

## Claims

1. A polyurethane/polyurea material that comprises the reaction product of:
(A) (i) a (cyclo)aliphatic polyisocyanate or (ii) (cyclo)aliphatic polyisocyanate prepolymer having an NCO group content of about 4 to 60 weight-%, and an average functionality of 1.8 to 6, wherein the (cyclo)aliphatic polyisocyanate prepolymer comprises an organic compound (A)(2) having at least 2 hydroxyl groups and a number average molecular weight of 200 to 1,000;
with
(B) an isocyanate-reactive component comprising at least one aromatic diamine compound which contains from 1 to 8 thiomethyl groups, and has a number average molecular weight of from 150 to 1000;
in the presence of
(C) one or more catalysts selected from the group consisting of tin (II) catalysts, bismuth (III) catalysts and mixtures thereof;
wherein the relative quantities of (A) and (B) are such that the Isocyanate Index is from about 70 to about 130.

2. The polyurethane/polyurea material of Claim 1, wherein (B) said aromatic diamine compound is selected from the group consisting of 3,5-dimethylthiotoluene-2,4-diamine, 3,5-dimethylthiotoluene-2,6-diamine and mixtures thereof.

3. The polyurethane/polyurea material of Claim 1, wherein (C) said tin (II) catalysts are selected from the group consisting of tin(II) bromide, tin(II) oxide, tin(II) acetate, tin(II) octoates and mixtures thereof.

4. The polyurethane/polyurea material of Claim 1, wherein (C) said bismuth (III) catalysts comprise one or more bismuth carboxylates.

5. The polyurethane/polyurea material of Claim 1, wherein (A) said (cyclo)aliphatic polyisocyanate or (cyclo)aliphatic polyisocyanate prepolymer comprises dicyclohexylmethane-4,4'-diisocyanate.

6. The polyurethane/polyurea material of Claim 1, which is optically clear.

7. A process for the preparation of an polyurethane/polyuria material, comprising reacting:
(A) a (cyclo)aliphatic polyisocyanate or (cyclo)aliphatic polyisocyanate prepolymer having an NCO group content of about 4 to 60 weight-%, and an average functionality of 1.8 to 6, wherein the (cyclo)aliphatic polyisocyanate prepolymer comprises an organic compound (A)(2) having at least 2 hydroxyl groups and a number average molecular weight of 200 to 1,000;
with
(B) an isocyanate-reactive component comprising at least one aromatic diamine compound which contains from 1 to 8 thiomethyl groups, and has a number average molecular weight of from 150 to 1000;
in the presence of
(C) one or more catalysts selected from the group consisting of tin (II) catalysts, bismuth (III) catalysts and mixtures thereof;
wherein the relative quantities of (A) and (B) are such that the Isocyanate Index is from about 70 to about 130.

8. The process of Claim 7, wherein (B) said aromatic diamine compound is selected from the group consisting of 3,5-dimethylthiotoluene-2,4-diamine, 3,5-dimethyithiotoluene-2,6-diamine and mixtures thereof.

9. The process of Claim 7, wherein (C) said tin (II) catalysts are selected from the group consisting of tin(II) bromide, tin(II) oxide, tin(II) acetate, tin(II) octoates and mixtures thereof.

10. The process of Claim 7, wherein (C) said bismuth (III) catalysts comprise one or more bismuth carboxylates.

11. The process of Claim 7, wherein (A) said (cyclo)aliphatic polyisocyanate or (cyclo)aliphatic polyisocyanate prepolymer comprises dicyclohexylmethane-4,4'-diisocyanate.

12. The process of Claim 7, wherein the resultant polyurethane/polyurea is optically clear.

## Patentansprüche

1. Polyurethan/Polyharnstoff-Material, umfassend das Reaktionsprodukt von:
(A) (i) einem (cyclo)aliphatischen Polyisocyanat oder (ii) (cyclo)aliphatischen Polyisocyanatprepolymer mit einem NCO-Gruppengehalt von etwa 4 bis 60 Gew.-% und einer durchschnittlichen Funktionalität von 1,8 bis 6, wobei das (cyclo)aliphatische Polyisocyanatprepolymer eine organische Verbindung (A)(2), die mindestens 2 Hydroxylgruppen enthält und ein zahlenmittleres Molekulargewicht von 200 bis 1000 aufweist, umfasst;
mit
(B) einer gegenüber Isocyanat reaktiven Komponente, umfassend mindestens eine aromatische Diaminverbindung, die 1 bis 8 Thiomethylgruppen enthält und ein zahlenmittleres Molekulargewicht von 150 bis 1000 aufweist;
in Gegenwart von
(C) einem oder mehreren Katalysatoren aus der Gruppe bestehend aus Zinn(II)-Katalysatoren, Bismut(III)-Katalysatoren und Mischungen davon;
wobei die relativen Mengen von (A) und (B) so bemessen sind, dass der Isocyanat-Index etwa 70 bis etwa 130 beträgt.

2. Polyurethan/Polyharnstoff-Material nach Anspruch 1, wobei (B) die aromatische Diaminverbindung aus der Gruppe bestehend aus 3,5-Dimethylthiotoluol-2,4-diamin, 3,5-Dimethylthiotoluol-2,6-diamin und Mischungen davon ausgewählt ist.

3. Polyurethan/Polyharnstoff-Material nach Anspruch 1, wobei (C) die Zinn(II)-Katalysatoren aus der Gruppe bestehend aus Zinn(II)-bromid, Zinn(II)-oxid, Zinn(II)-acetat, Zinn(II)-octat und Mischungen davon ausgewählt ist.

4. Polyurethan/Polyharnstoff-Material nach Anspruch 1, wobei (C) die Bismut (III)-Katalysatoren ein oder mehrere Bismutcarboxylate umfassen.

5. Polyurethan/Polyharnstoff-Material nach Anspruch 1, wobei (A) das (cyclo)aliphatische Polyisocyanat oder (cyclo)aliphatische Polyisocyanatprepolymer 4,4'-Dicyclohexylmethandiisocyanat umfasst.

6. Polyurethan/Polyharnstoff-Material nach Anspruch 1, das optisch klar ist.

7. Verfahren zur Herstellung eines Polyurethan/Polyharnstoff-Materials, umfassend das Umsetzen von
(A) einem (cyclo)aliphatischen Polyisocyanat oder (cyclo)aliphatischen Polyisocyanatprepolymer mit einem NCO-Gruppengehalt von etwa 4 bis 60 Gew.-% und einer durchschnittlichen Funktionalität von 1,8 bis 6, wobei das (cyclo)-aliphatische Polyisocyanatprepolymer eine organische Verbindung (A) (2), die mindestens 2 Hydroxylgruppen enthält und ein zahlenmittleres Molekulargewicht von 200 bis 1000 aufweist, umfasst;
mit
(B) einer gegenüber Isocyanat reaktiven Komponente, umfassend mindestens eine aromatische Diaminverbindung, die 1 bis 8 Thiomethylgruppen enthält und ein zahlenmittleres Molekulargewicht von 150 bis 1000 aufweist;
in Gegenwart von
(C) einem oder mehreren Katalysatoren aus der Gruppe bestehend aus Zinn(II)-Katalysatoren, Bismut(III)-Katalysatoren und Mischungen davon;
wobei die relativen Mengen von (A) und (B) so bemessen werden, dass der Isocyanat-Index etwa 70 bis etwa 130 beträgt.

8. Verfahren nach Anspruch 7, wobei (B) die aromatische Diaminverbindung aus der Gruppe bestehend aus 3,5-Dimethylthiotoluol-2,4-diamin, 3,5-Dimethylthiotoluol-2,6-diamin und Mischungen davon ausgewählt wird.

9. Verfahren nach Anspruch 7, wobei (C) die Zinn(II)-Katalysatoren aus der Gruppe bestehend aus Zinn(II)-bromid, Zinn(II)-oxid, Zinn(II)-acetat, Zinn(II)-octat und Mischungen davon ausgewählt werden.

10. Verfahren nach Anspruch 7, wobei (C) die Bismut(III)-Katalysatoren ein oder mehrere Bismutcarboxylate umfassen.

11. Verfahren nach Anspruch 7, wobei (A) das (cyclo)-aliphatische Polyisocyanat oder (cyclo)aliphatische Polyisocyanatprepolymer 4,4'-Dicyclohexylmethandiisocyanat umfasst.

12. Verfahren nach Anspruch 7, wobei der resultierende Polyurethan/Polyharnstoff optisch klar ist.

## Revendications

1. Matériau polyuréthane/polyurée qui comprend le produit réactionnel de :
(A) (i) un polyisocyanate (cyclo)aliphatique ou (ii) un prépolymère de polyisocyanate (cyclo)aliphatique ayant une teneur en groupes NCO d'environ 4 à 60 % en poids, et une fonctionnalité moyenne de 1,8 à 6, le prépolymère de polyisocyanate (cyclo)aliphatique comprenant un composé organique (A)(2) comportant au moins 2 groupes hydroxyle et ayant une masse moléculaire moyenne en nombre de 200 à 1 000 ;
avec
(B) un constituant réagissant avec les isocyanates comprenant au moins un composé diamine aromatique qui contient de 1 à 8 groupes thiométhyle, et a une masse moléculaire moyenne en nombre de 150 à 1 000 ;
en présence de
(C) un ou plusieurs catalyseurs sélectionnés dans le groupe constitué de catalyseurs à base d'étain (II), de catalyseurs à base de bismuth (III), et de mélanges de ceux-ci ;
dans lequel les quantités relatives de (A) et (B) sont telles que l'indice isocyanate est d'environ 70 à environ 130.

2. Matériau polyuréthane/polyurée selon la revendication 1, dans lequel (B) ledit composé diamine aromatique est sélectionné dans le groupe constitué de la 3,5-diméthylthiotoluène-2,4-diamine, de la 3,5-diméthylthiotoluène-2,6-diamine, et de mélanges de celles-ci.

3. Matériau polyuréthane/polyurée selon la revendication 1, dans lequel (C) lesdits catalyseurs à base d'étain (II) sont sélectionnés dans le groupe constitué du bromure d'étain (II), de l'oxyde d'étain (II), de l'acétate d'étain (II), de l'octoate d'étain (II), et de mélanges de ceux-ci.

4. Matériau polyuréthane/polyurée selon la revendication 1, dans lequel (C) lesdits catalyseurs à base de bismuth (III) comprennent un ou plusieurs carboxylates de bismuth.

5. Matériau polyuréthane/polyurée selon la revendication 1, dans lequel (A) ledit polyisocyanate (cyclo)aliphatique ou prépolymère de polyisocyanate (cyclo)aliphatique comprend le 4,4'-diisocyanate de dicyclohexylméthane.

6. Matériau polyuréthane/polyurée selon la revendication 1, lequel est optiquement transparent.

7. Procédé de préparation d'un matériau polyuréthane/polyurée, comprenant la réaction de :
(A) un polyisocyanate (cyclo)aliphatique ou un prépolymère de polyisocyanate (cyclo)aliphatique ayant une teneur en groupes NCO d'environ 4 à 60 % en poids, et une fonctionnalité moyenne de 1,8 à 6, le prépolymère de polyisocyanate (cyclo)aliphatique comprenant un composé organique (A)(2) comportant au moins 2 groupes hydroxyle et ayant une masse moléculaire moyenne en nombre de 200 à 1 000 ;
avec
(B) un constituant réagissant avec les isocyanates comprenant au moins un composé diamine aromatique qui contient de 1 à 8 groupes thiométhyle, et a une masse moléculaire moyenne en nombre de 150 à 1 000 ;
en présence de
(C) un ou plusieurs catalyseurs sélectionnés dans le groupe constitué de catalyseurs à base d'étain (II), de catalyseurs à base de bismuth (III), et de mélanges de ceux-ci ;
dans lequel les quantités relatives de (A) et (B) sont telles que l'indice isocyanate est d'environ 70 à environ 130.

8. Procédé selon la revendication 7, dans lequel (B) ledit composé diamine aromatique est sélectionné dans le groupe constitué de la 3,5-diméthylthiotoluène-2,4-diamine, de la 3,5-diméthylthiotoluène-2,6-diamine, et de mélanges de celles-ci.

9. Procédé selon la revendication 7, dans lequel (C) lesdits catalyseurs à base d'étain (II) sont sélectionnés dans le groupe constitué du bromure d'étain (II), de l'oxyde d'étain (II), de l'acétate d'étain(II), de l'octoate d'étain (II), et de mélanges de ceux-ci.

10. Procédé selon la revendication 7, dans lequel (C) lesdits catalyseurs à base de bismuth (III) comprennent un ou plusieurs carboxylates de bismuth.

11. Procédé selon la revendication 7, dans lequel (A) ledit polyisocyanate (cyclo)aliphatique ou prépolymère de polyisocyanate (cyclo)aliphatique comprend le 4,4'-diisocyanate de dicyclohexylméthane.

12. Procédé selon la revendication 7, dans lequel le polyuréthane/polyurée obtenu est optiquement transparent.
